# EUROPÄISCHE PATENTANMELDUNG

(11) **EP 2 381 327 A1**
(43) Veröffentlichungstag der Anmeldung: **26.10.2011**
(21) Anmeldenummer: 11405244.2
(22) Anmeldetag: 15.04.2011
(51) Int. Cl.: G05B 19/418, B65H 43/00

(54) **Steuereinrichtung für eine Verarbeitungsanlage zur Produktion von Kollektionen von Druckereiprodukten.**

(30) Priorität: 20.04.2010 CH 561102010
(71) Anmelder: Ferag AG, 8340 Hinwil (CH)
(72) Erfinder: Altwegg, Heinz, 3220 Fehraltorf (CH)
(74) Vertreter: Frei Patent Attorneys

(57) **Zusammenfassung**

Eine Steuereinrichtung steuert eine Verarbeitungsanlage zur Produktion von Kollektionen von Druckereiprodukten, wobei die Verarbeitungsanlage Anlagenabschnitte (1, 2, 3, 4) aufweist, welche Eingangsströme (11, 12; 21, 22; 31, 32; 41, 42) von Teilprodukten zu Ausgangsströmen (27, 27a; 37, 37a, 47, 47a) von Kollektionen dieser Teilprodukte kombinieren. Den Anlagenabschnitten sind Steuereinheiten zugeordnet, welche anhand einer vorgegebenen Produkteanforderung (Pa2, Pa3, Pa4, Pa21, Pa31, Pa41) den zugeordneten Anlagenabschnitt zum Erzeugen eines entsprechenden Ausgangsstroms ansteuern.

Es ist jeweils eine Steuereinheit (20, 30, 40) dazu eingerichtet, Produkteanforderungen (Pa2) von einer übergeordneten Steuerung (100) oder von einer anderen Steuereinheit (30) zu erhalten, und weitere Produkteanforderungen (Pa21) für die Steuereinheit (10) eines vorgeschalteten Anlagenabschnittes (1) zu erzeugen.

## Beschreibung

Die Erfindung bezieht sich auf das Gebiet der Steuerungseinrichtungen für Verarbeitungsanlagen von Druckereiprodukten. Sie bezieht sich auf eine Steuereinrichtung für eine Verarbeitungsanlage zur Produktion von Kollektionen von Druckereiprodukten und ein Steuerverfahren gemäss dem Oberbegriff der entsprechenden unabhängigen Patentansprüche.

### STAND DER TECHNIK

Verarbeitungsanlagen für Druckereiprodukte umfassen Zuführvorrichtungen für einzelne Druckereiprodukte oder Teilprodukte, und Einheiten zum Zusammenstellen derselben zu weiteren Teilprodukten oder Endprodukten. Typischerweise sind die Druckereiprodukte Zeitungen, Zeitschriften, Broschüren und dergleichen. Einzelne der Teilprodukte können in einer Rotationsdruckmaschine erzeugt und direkt oder über einen Speicher zugeführt werden. Andere Teilprodukte können auch flache Beilagen sein, beispielsweise Warenmuster, CD's. Die Einheiten zum Zusammenstellen sind beispielsweise zum Einstecken, Sammeln oder Zusammentragen ausgebildet.

Solche Einheiten, wie auch weitere Einheiten zum Etikettieren, Folieren, Paketieren, Binden, etc. werden in vielfältiger Weise entsprechend Kundenspezifikation zu einer Verarbeitungsanlage kombiniert, aufgebaut und programmiert. Die Programmierung einer Steuereinheit für die gesamte Verarbeitungsanlage muss für die jeweilige Konfiguration angepasst werden. Dabei steigt mit der Komplexität der Anlage der Aufwand zum Programmieren der Steuerung überproportional. Auch wird die Koordination der einzelnen Einheiten durch die Steuerung überproportional aufwendig, kompliziert, und damit auch fehleranfälliger.

### DARSTELLUNG DER ERFINDUNG

Es ist deshalb Aufgabe der Erfindung, eine Steuereinrichtung der eingangs genannten Art und ein entsprechendes Verfahren zu schaffen, welche die oben genannten Nachteile beheben.

Diese Aufgabe lösen eine Steuereinrichtung und ein und ein Steuerverfahren mit den Merkmalen des entsprechenden unabhängigen Patentansprüche.

Die Steuereinrichtung ist zur Steuerung einer Verarbeitungsanlage zur Produktion von Kollektionen von Druckereiprodukten eingerichtet, wobei die Verarbeitungsan- lage mindestens zwei Anlagenabschnitte aufweist, und jeder der Anlagenabschnitte dazu eingerichtet ist, aus mehreren Eingangsströmen von Teilprodukten als Eingangsprodukten einen Ausgangsstrom von Kollektionen dieser Teilprodukte als Ausgangsprodukten zu erzeugen, und wobei ein Ausgangsstrom mindestens eines ersten Anlagenabschnittes ein Eingangsstrom eines zweiten, dem ersten nachgeschalteten Anlagenabschnittes ist.

Dabei weist die Steuereinrichtung mehrere programmierbare Steuereinheiten auf, wobei für jede der Steuereinheiten gilt, dass
- die Steuereinheit einem der Anlagenabschnitte zugeordnet ist und diesen Anlagenabschnitt steuert und überwacht,
- die Steuereinheit dazu programmiert ist, anhand einer vorgegebenen Produktedefinition von Ausgangsprodukten, im Folgenden Produkteanforderung genannt, und einer vorgegebenen Produktedefinition von Eingangsprodukten, Produktvorgabe genannt, den zugeordneten Anlagenabschnitt derart anzusteuern, dass der Ausgangsstrom des Anlagenabschnittes aus Kollektionen der Teilprodukte besteht und der Produkteanforderung entspricht,
wobei eine erste und eine zweite Steuereinheit dem ersten respektive dem zweiten Anlagenabschnitt zugeordnet sind,
die zweite Steuereinheit dazu eingerichtet ist, Produkteanforderungen von einer übergeordneten Steuerung zu erhalten,
die zweite Steuereinheit dazu eingerichtet ist, weitere Produkteanforderungen für die erste Steuereinheit zu erzeugen, und
die erste Steuereinheit dazu eingerichtet ist, diese weiteren Produkteanforderungen von der zweiten Steuereinheit zu erhalten.

Vorzugsweise weist dabei eine Produktedefinition jeweils eine Spezifikation einer vorgegebenen Anzahl von gleichartigen einzelnen Druckereiprodukten oder Kollektionen, und/oder eine Spezifikation von individuellen Kollektionen auf.

Die erste Steuereinheit steuert anhand der weiteren Produkteanforderungen den ersten Anlagenabschnitt an, so dass der Ausgangsstrom des ersten Anlagenabschnittes diesen weiteren Produkteanfotderungen entspricht. Der Ausgangsstrom des ersten Anlagenabschnittes ist ein Eingangsstrom des zweiten Anlagenabschnittes. Die zweite Steuereinheit steuert anhand der Produkteanforderungen den zweiten Anlagenabschnitt zum Zusammenstellen dieses Ausgangsstromes mit weiteren Teilprodukten, wonach der Ausgangsstrom des zweiten Anlagenabschnittes den Produkteanforderungen entspricht. Es werden also Produkte vorwärts durch die Anlage produziert, und Produkteanforderungen rückwärts durch die Steuereinheiten der Anlage weitergegeben. Verallgemeinert gesprochen ist also jeweils eine Steuereinheit dazu eingerichtet, Produkteanforderungen von einer übergeordneten Steuerung oder von einer Steuereinheit eines nachgeschalteten Anlagenabschnittes zu erhalten, und weitere Produkteanforderungen für die Steuereinheit eines vorgeschalteten Anlagenabschnittes zu erzeugen.

Unter Kollektionen, auch Zusammenstellungen genannt, wird im Folgenden eine beliebige Art der Kombination von Druckprodukten zu einer Einheit (welche als Teilprodukt oder als Endprodukt betrachtet werden kann), wobei die miteinander kombinierten Druckprodukte auch wieder Einheiten aus einem vorangehenden Zusammenstellen sein können. Das Zusammenstellen respektive Kombinieren kann beispielsweise durch Einstecken, Sammeln oder Zusammentragen geschehen.

Durch die erfindungsgemässe konzeptionelle und steuerungstechnische Auftrennung einer gesamten Verarbeitungsanlage in einzelne Anlagenabschnitte, welche im Wesentlichen über einfache, standardisierte Informationsschnittstelle (also die Produkteanforderungen) miteinander kommunizieren, wird die Programmierung stark vereinfacht, Die einzelnen Anlagenabschnitte arbeiten soweit möglich autonom, indem Fehler soweit möglich innerhalb eines Anlagenabschnittes behoben werden. Nur wenn dies nicht möglich ist, ist eine Koordination und Kommunikation mit anderen Anlagenabschnitten erforderlich. In einer bevorzugten Ausführungsform der Erfindung liegen weitere Steuereinheiten zu weiteren Anlagenabschnitten vor, wobei jeweils
- Steuereinheiten, die einem nachgeschalteten Anlagenabschnitt zugeordnet sind, dazu eingerichtet sind, Produkteanforderungen an Steuereinheiten von vorgeschalteten Anlagenabschnitten zu erzeugen, und
- Steuereinheiten, die einem vorgeschalteten Anlagenabschnitt zugeordnet sind, dazu eingerichtet sind, Produkteanforderungen von Steuereinheiten von nachgeschalteten Anlagenabschnitten zu empfangen und umzusetzen.

Die Eingangsströme eines Anlagenabschnittes sind entweder Ausgangsströme eines oder mehrerer vorgeschalteter Anlagenabschnitte, oder stammen aus Quellen, die dem Anlagenabschnitt zugeordnet sind. Solche Quellen sind beispielsweise Speicher wie Wickel, Stapel, oder kontinuierlich produzierende Quellen wie z.B. eine Rotationsdruckanlage. Stapel können durch Anleger eingespeist werden, wobei dicke Produkte durch mehrere abwechslungsweise arbeitende Anleger eingespeist werden können. Eine Produktedefinition der Eingangsprodukte dieser Eingangsströme, also die Produktvorgabe, spezifiziert deren Zusammensetzung. Elemente der Produktevorgabe können der Steuerung - auf der Ebene der übergeordneten Steuerung oder auf der Ebene der einzelnen Steuereinheiten - vorgegeben werden (z.B. "Teilprodukt xy steht an Zuführung 123 zur Verfügung"), oder umgekehrt durch die Steuerung vorgegeben werden (z.B. "Teilprodukt xy ist an Zuführung 123 anzulegen").

Ein Ausgangsstrom eines Anlagenabschnittes kann beispielsweise auf einem Bandförderer als Schuppenstrom oder vereinzelte Produkte, in einer Greiferkette mit Produkten, oder als Folge von Paketen oder Säcken vorliegen und angefordert sein.

In einer weiteren bevorzugten Ausführungsform der Erfindung sind einem ersten, vorgeschalteten Anlagenabschnitt mehrere nachgeschaltete Anlagenabschnitte zugeordnet, und wird ein Strom von Ausgangsprodukten des ersten Anlagenabschnittes in mehrere Eingangsströme der nachgeschalteten Anlagenabschnitte gesplittet. Dabei sind die mehreren Steuereinheiten, die den nachgeschalteten Anlagenabschnitten zugeordnet sind, jeweils dazu eingerichtet, Produkteanforderungen an die Steuereinheit des ersten, vorgeschalteten Anlagenabschnitts zu erzeugen. Dieser erste Anlagenabschnitt produziert also Eingangsströme für die mehreren nachgeschalteten Anlagenabschnitte. Dabei können diese Ströme alle aus gleich aufgebauten Teilprodukten bestehen, so dass der erste Anlagenabschnitt keinen Unterschied in der Produktion machen muss. Oder es können diese Ströme jeweils aus unterschiedlich aufgebauten Teilprodukten bestehen, so dass der erste Anlagenabschnitt beispielsweise sequentiell eines oder mehrere Teilprodukte für einen ersten, dann einen zweiten, dann evtl. noch für einen dritten und weitere nachgeschaltete Anlagenabschnitte, und dann wieder für den ersten Anlagenabschnitt etc. produziert.

In einer bevorzugten Ausführungsform der Erfindung ist eine Steuereinheit dazu eingerichtet, im Falle eines Produktionsfehlers, der zu einem Verlust von Produkten im zugeordneten Anlagenabschnitt führt, eine Produkteanforderung an eine Steuereinheit eines vorgeschalteten Anlagenabschnitts zu erzeugen, zur Produktion von Ersatzprodukten für die verlorenen Produkte. Ein Verlust kann bedeuten, dass ein Produkt beschädigt wird oder fehlerhaft zusammengestellt ist, und dabei nicht rückgeführt und ergänzt werden kann. Das Produkt wird im Anlagenabschnitt selber oder später ausgeschleust. Ein als verloren betrachtetes Produkt oder Teilprodukt kann ein einzelnes Druckereiprodukt sein, das nicht richtig zusammengestellt wurde, oder ein Paket, in welchem eines oder mehrere enthaltene Endprodukte fehlerbehaftet sind oder ganz fehlen.

In einer bevorzugten Ausführungsform der Erfindung ist, wenn der Verlust von Produkten in einem Anlagenabschnitt detektiert wird, und wenn zu diesem Zeitpunkt eine Belieferung des Anlagenabschnittes mit gleichartigen Produkten (bei Umsetzung einer bestimmten Produkteanforderung) noch stattfindet, die Steuereinheit dazu eingerichtet, eine ergänzende Produkteanforderung an die Steuereinheit des vorgeschalteten Anlagenabschnitts zu erzeugen, um die laufende Belieferung mit gleichartigen Produkten zu erweitern, also indem am Ende der Belieferung noch eine gewisse Anzahl zusätzlicher Produkte der gleichen Art geliefert wird. So kann im betroffenen Anlagenabschnitt mit den bereits vorhandenen Teilprodukten weiterproduziert werden. Die dabei zusätzlich gebrauchten Teilprodukte werden durch die verlängerte Belieferung gemäss der ergänzenden Produkteanforderung bereitgestellt.

In einer bevorzugten Ausführungsform der Erfindung ist, wenn der Verlust von Produkten in einem Anlagenabschnitt detektiert wird, und zu diesem Zeitpunkt eine Belieferung des Anlagenabschnittes mit gleichartigen Produkten (bei Umsetzung einer bestimmten Produkteanforderung) *nicht mehr* stattfindet, die Steuereinheit dazu eingerichtet, eine zusätzliche Produkteanforderung an die Steuereinheit des vorgeschalteten Anlagenabschnitts zu erzeugen, um eine zusätzliche Belieferung mit entsprechenden Produkten auszulösen. In diesem Fall wird beispielsweise das (eine oder mehrere) verlorene Produkt separat erzeugt und nachgeliefert. Hier, wie auch ganz allgemein, kann ein verlorenes Produkt ein Teilprodukt oder ein Endprodukt aus Druckereiprodukten (Kollektion) sein, oder ein Stapel oder ein Paket aus Endprodukten sein.

Es kann eine Steuereinheit jeweils auf einer eigenen Steuer-Hardwareeinheit ausgeführt werden. Es können aber auch zwei oder mehr oder alle Steuereinheiten auf derselben Hardwareeinheit ausgeführt werden.

In einer bevorzugten Ausführungsform der Erfindung sind die mehreren Steuereinheiten Instanzen derselben generischen Steuereinheit. Dabei ist vorzugsweise eine generische Steuereinheit durch eine generische Steuer-Softwareeinheit gebildet. Damit ist es möglich, im wesentlichen dieselbe generische Software für verschiedene miteinander kooperierende Anlagenabschnitte einzusetzen. Der Programmieraufwand und die Konfigurationsarbeit für die Gesamtanlage werden dadurch signifikant reduziert.

Eine Instanz einer generischen Steuereinheit ist dabei vorzugsweise
- durch Duplizieren einer generischen Steuer-Softwareeinheit und/oder
- durch Programmieren einer generischen Steuer-Hardwareeinheit mit einer generischen Steuer-Softwareeinheit
erstellt, unter Konfiguration und Parametrierung entsprechend des jeweiligen, von dieser Instanz gesteuerten Anlagenabschnittes.

Ein Datenverarbeitungssystem als Teil einer Steuereinheit oder der Steuerungseinrichtung weist Speichermittel mit darin gespeicherten Computerprogrammcodemitteln auf, welche ein Computerprogramm beschreiben, und Datenverarbeitungsmittel zur Ausführung des Computerprogramms, wobei die Ausführung des Computerprogramms zur Durchführung des Verfahrens gemäss der Erfindung führt.

Das Computerprogramm zur Realisierung des Verfahrens gemäss der Erfindung ist in einen internen Speicher einer digitalen Datenverarbeitungseinheit ladbar und weist Computerprogrammcodemittel auf, welche, wenn sie in einer digitalen Datenverarbeitungseinheit ausgeführt werden, diese zur Ausführung des erfindungsgemässen Verfahrens bringen. In einer bevorzugten Ausführungsform der Erfindung weist ein Computerprogrammprodukt einen Datenträger, respektive ein computerlesbares Medium auf, auf welchem die Computerprogrammcodemittel gespeichert sind.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: einen Aufbau einer Verarbeitungsanlage;
- Figur 2: eine schematische Struktur dieser Verarbeitungsanlage mit korrespondierenden Steuereinheiten; und
- Figur 3 und 4: weitere Strukturen von Verarbeitungsanlagen mit Steuereinheiten.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### BEVORZUGTE WEGE ZUR AUSFÜHRUNG DER ERFINDUNG

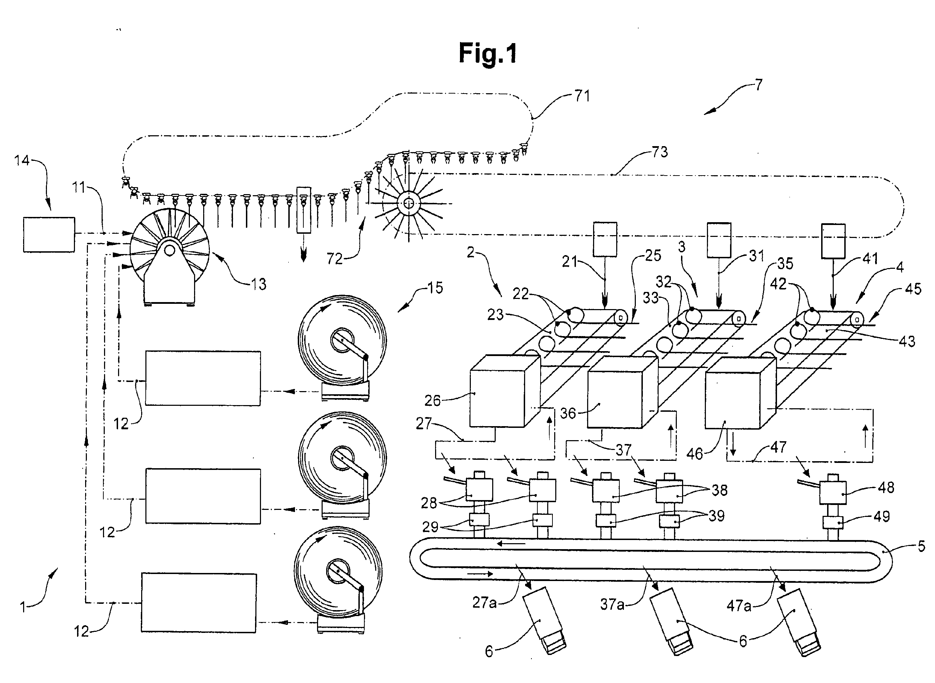

**Figur 1** zeigt einen Aufbau einer Verarbeitungsanlage: Diese ist grob unterteilbar in einen ersten Anlagenabschnitt 1, welcher über eine Zwischeneinheit 7 mehrere, in diesem Fall drei, weitere Anlagenabschnitte 2, 3, 4 mit Teilprodukten respektive Strömen 21, 31, 41 von Teilprodukten versorgt. Der erste Anlagenabschnitt 1 weist eine Einstecktrommel 13 auf, welche von einer Rotationsdruckanlage 14 mit einem Hauptproduktestrom oder ersten Eingangsstrom 11 und weiteren Produkteströmen oder weiteren Eingangsströmen 12 aus Wickeln 15 versorgt wird. Die zu einem weiteren Teilprodukt kombinierten Teilprodukte werden der Trommel 13 entnommen und in einer Zwischeneinheit 7 über einen ersten Rundlauf 71 und eine Übergabeeinheit 72 auf einen zweiten Rundlauf 73 transportiert. Vom zweiten Rundlauf 73 werden die Teilprodukte selektiv gesteuert auf einen der drei weiteren Anlagenabschnitte 2, 3, 4 abgegeben.

Diese weiteren drei Anlagenabschnitte 2, 3, 4 werden einerseits von der Zwischeneinheit 7 mit jeweils einem zweiten, dritten und vierten Eingangsstrom 21, 31, 41 gespeist. Andererseits werden diese Anlagenabschnitte jeweils mit zweiten, dritten und vierten weiteren Eingangsströmen 22, 32, 42 gespeist. Diese werden durch jeweils mehrere erste, zweite, dritte Zuförderer 25, 35, 45 pro Anlagenabschnitt zugefördert. Zum Zusammenstellen des jeweiligen Ausgangsproduktes eines der weiteren Anlagenabschnitte 2, 3, 4 liegt hier jeweils eine Vorrichtung zum Zusammentragen 23, 33, 43 vor. Am Ende dieser Zusammentragvorrichtungen ist jeweils eine Foliereinheit 26, 36, 46 angeordnet, welche einen Strom von optional folierten Ausgangsprodukten 27, 37, 47 an einen Ausgangs-Rundlauf liefert. Dieser Rundlauf speist pro Anlagenabschnitt 2, 3, 4 jeweils eine oder mehrere Stapeleinheiten 28, 38, 48 mit nachgeschalteten Bindeeinheiten 29, 39, 49. Gebundene Stapel werden über einen Plattenkettentransporter 5 in Form von Ausgangs-Paketströmen 27a, 37a, 47a in Lastwagen 6 hinein verteilt gefördert.

Im Betrieb der ganzen Anlage kann die Zwischeneinheit 7 alle drei, oder nur einen oder zwei der weiteren Anlagenabschnitte 2, 3, 4 beliefern. Die Teilprodukte, welche an die weiteren Anlagenabschnitte 2, 3, 4 geliefert werden, können identisch sein, oder es kann der erste Anlagenabschnitt 1 Gruppen von jeweils zwei oder drei nacheinander geförderten unterschiedlichen Teilprodukten für zwei oder drei belieferte weitere Anlagenabschnitte erzeugen. Die Teilprodukte und Produkte sind grundsätzlich individualisiert förderbar und verarbeitbar, d.h. dass die Zusammensetzung eines jeden (Teil)Produktes bekannt sein und individuell gesteuert sein kann.

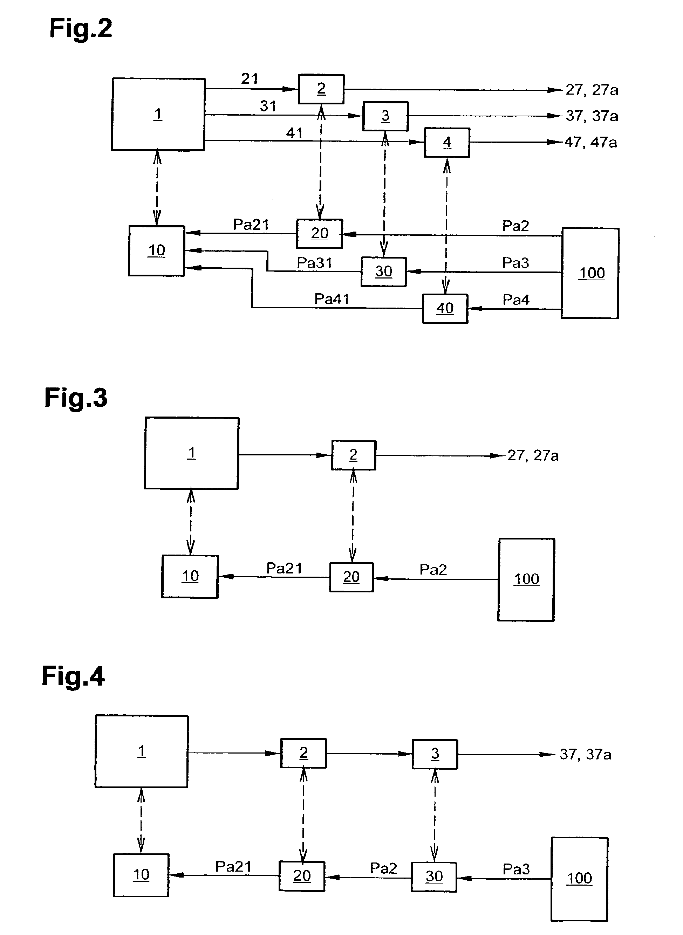

Anstelle einer monolithischen Steuerung, welche alle Abläufe zentral koordiniert und überwacht, liegen mehrere Steuereinheiten 10, 20, 30 vor, wie in der **Figur 2** dargestellt. Diese zeigt eine stark schematische Struktur der Verarbeitungsanlage der **Figur 1** mit korrespondierenden Steuereinheiten. In der oberen Hälfte der Figur sind die Anlagenabschnitte 1, 2, 3, 4 dargestellt, in der unteren Hälfte die jeweils einem Anlagenabschnitt zugeordneten Steuereinheiten 10, 20, 30, 40, welche über strichliert gezeichnete Mess- und Steuerverbindungen mit den jeweiligen Anlagenabschnitten verbunden sind. Eine übergeordnete Steuerung 100 gibt Produkteanforderungen Pa2, Pa3, Pa4 an die weiteren Anlagenabschnitte 2, 3, 4. Diese Produkteanforderungen Pa2, Pa3, Pa4 können beispielsweise als Anforderung an den Strom von Ausgangsprodukten 27, 37, 47 oder von Ausgangs-Paketen 27a, 37a, 47a formuliert sein.

Die weiteren Anlagenabschnitte 2, 3, 4 bilden die geforderten Ausgangsprodukte oder -Pakete aus den Teilprodukten aus ihren jeweiligen Zuförderern 25, 35, 45 und aus dem jeweiligen weiteren Eingangsstrom 21, 31, 41. Dazu fordern sie, respektive fordert die entsprechende Steuereinheit 10, 20, 30 vermittelst weiterer Produkteanforderungen Pa21, Pa31, Pa41 entsprechend benötigte Teilprodukte respektive Teilprodukteströme vom ersten Anlagenabschnitt 1 an. Der Informationsfluss oder Steuerfluss, auf dieser Ebene der Anlagenabschnitte betrachtet, verläuft also rückwärts durch die Anlage, ausgehend von den geforderten Endprodukten.

Der vorwärts verlaufende Fluss von Teilprodukten als Eingangsstrom 21, 31, 41 in die weiteren Anlagenabschnitte 2, 3, 4 ist durch Pfeile dargestellt, ebenso der Strom von Ausgangsprodukten 27, 37, 47 oder von Ausgangs-Paketen 27a, 37a, 47a.

Eine Produkteanforderung ist eine formalisierte Beschreibung der Zusammensetzung einer Folge von Druckereiprodukten. Dabei kann im Prinzip jedes einzelne Druckereiprodukt individualisiert definiert werden. Die Umsetzung von Produkteanforderungen zur Steuerung einer Produktionsanlage ist grundsätzlich bekannt, oft unter dem Begriff "Post Press Management (PPM)".

Wie genau im vorliegenden Fall die formalisierte Beschreibung strukturiert ist, ist grundsätzlich sekundär. Beispielsweise können (Teil)Produkte einzeln beschrieben werden, z.B. Eine Folge von Produkten als
- Produkt k: Hauptprodukt A, Beilagen B, C, D, Adressetikette mit Text abc...
- Produkt k+1: Hauptprodukt A, Beilagen B, C, Adressetikette mit Text def...
- Produkt k+2: Hauptprodukt A, Beilagen B, D, Adressetikette mit Text ghi...
- Produkt k+3: Hauptprodukt F, Beilagen B, C, D, Adressetikette mit Text jkl ...

Eine Folge von gleichartigen Produkten kann beschrieben sein durch die Anzahl von Produkten und deren Zusammensetzung, beispielsweise
- 600 Exemplare aus jeweils Hauptprodukt A, Beilagen B, C, D Weitere Information, welche mit einer solchen Beschreibung einer Folge oder eines einzelnen Produktes verknüpft sein kann, ist z.B.
- das Format des Produktes oder seiner Teile;
- Steuerinformation darüber, ob die Produktion überwacht werden soll oder nicht überwacht werden soll;
- wie im Falle von Fehlern in der Produktezusammenstellung vorgegangen werden soll (ignorieren, ausschleusen, nachbestellen, korrigieren ...);
- Daten für Beipackzettel, Barcodes oder RFID-Tags, welche einzelnen Produkten oder Paketen zugeordnet sind;
- Information, ob der Inhalt in Ordnung ist oder nicht (nicht korrekte Kollektionen werden z.B. später ausgeschleust);
- Zusatzinformation, z.B. eine Auftragsnummer.

An den verschiedenen Schnittstellen der Anlagenabschnitte können unterschiedliche Produkteanforderungen verwendet werden. Beispielsweise sind in der Struktur gemäss **Figur 1**
- die Produkteanforderungen Pa2, Pa3, Pa4 beschrieben durch: Name einer mit Druckprodukten zu beliefernden (Verteil)Zone; Anzahl und Aufbau von einzelnen Paketen für diese Zone; Aufbau der Produkte in diesen Paketen und weitere Information wie oben schon beschrieben. Mehrere Zonen können zusammengefasst als Verteilroute eines Lastwagens beschreiben sein.
- die weiteren Produkteanforderungen Pa21, Pa31, Pa41 beschrieben durch: Anzahl von Produkten; Aufbau der Produkte in diesen Paketen und weitere Information wie oben schon beschrieben.

**Figur 3** und **4** zeigen weitere beispielhafte Strukturen von Verarbeitungsanlagen mit Steuereinheiten. In der Figur 3 sind zwei, in der Figur 4 drei Anlagenabschnitte 1, 2, 3 hintereinander geschaltet. Entsprechende Steuereinheiten 10, 20, 30 geben ihre Produkteanforderungen, ausgehend von Produkteanforderungen der übergeordneten Steuerung 100, jeweils entgegen der Produktionsrichtung rückwärts weiter an die Steuereinheiten von vorangehenden Anlagenabschnitte. Solche Sequenzen von Anlagenabschnitten gemäss **Figur 3** und **4** und Aufsplittungen von Produkteströmen gemäss **Figur 2****,** sowie sich in einem Anlagenabschnitt vereinigende Produkteströme (nicht dargestellt) können im Prinzip beliebig miteinander kombiniert sein und durch erfindungsgemäss strukturierte und miteinander kommunizierende Steuerungseinrichtungen gesteuert werden.

## Patentansprüche

1. **Steuereinrichtung** für eine Verarbeitungsanlage zur Produktion von Kollektionen von Druckereiprodukten, wobei die Verarbeitungsanlage mindestens zwei Anlagenabschnitte (1, 2, 3, 4) aufweist, und jeder der Anlagenabschnitte (1, 2, 3, 4) dazu eingerichtet ist, aus mehreren Eingangsströmen (11, 12; 21, 22; 31, 32; 41, 42) von Teilprodukten als Eingangsprodukten einen Ausgangsstrom (27, 27a; 37, 37a, 47, 47a) von Kollektionen dieser Teilprodukte als Ausgangsprodukte zu erzeugen, und wobei ein Ausgangsstrom (27, 27a; 37, 37a, 47, 47a) mindestens eines ersten Anlagenabschnittes ein Eingangsstrom eines zweiten, dem ersten nachgeschalteten Anlagenabschnittes ist,
**dadurch gekennzeichnet, dass** die Steuereinrichtung mehrere programmierbare Steuereinheiten (10, 20, 30, 40) aufweist, wobei für jede der Steuereinheiten (10, 20, 30, 40) gilt, dass
• die Steuereinheit (10, 20, 30, 40) einem der Anlagenabschnitte zugeordnet ist und diesen Anlagenabschnitt steuert und überwacht,
• die Steuereinheit (10, 20, 30, 40) dazu programmiert ist, anhand einer vorgegebenen Produktedefinition von Ausgangsprodukten, im Folgenden Produkteanforderung (Pa2, Pa3, Pa4, Pa21, Pa31, Pa41) genannt, und einer vorgegebenen Produktedefinition von Eingangsprodukten, Produktvorgabe genannt, den zugeordneten Anlagenabschnitt (1, 2, 3, 4) derart anzusteuern, dass der Ausgangsstrom des Anlagenabschnittes (1, 2, 3, 4) aus Kollektionen der Teilprodukte besteht und der Produkteanforderung entspricht,
wobei eine erste und eine zweite Steuereinheit (10, 20) dem ersten respektive dem zweiten Anlagenabschnitt (1, 2) zugeordnet sind,
die zweite Steuereinheit (20) dazu eingerichtet ist, Produkteanforderungen (Pa2) von einer übergeordneten Steuerung (100) oder von einer anderen Steuereinheit (30) zu erhalten,
die zweite Steuereinheit (20) dazu eingerichtet ist, weitere Produkteanforderungen (Pa2 1) für die erste Steuereinheit (10) zu erzeugen, und die erste Steuereinheit (10) dazu eingerichtet ist, diese weiteren Produkteanforderungen (Pa21) von der zweiten Steuereinheit (20) zu erhalten.

2. Steuereinrichtung gemäss Anspruch 1, wobei eine Produktedefinition jeweils eine Spezifikation einer vorgegebenen Anzahl von gleichartigen einzelnen Druckereiprodukten oder Kollektionen, und/oder eine Spezifikation von individuellen Kollektionen aufweist.

3. Steuereinrichtung gemäss Anspruch 1 oder 2, wobei weitere Steuereinheiten (20, 30, 40) zu weiteren Anlagenabschnitten vorliegen, und jeweils
• Steuereinheiten (20, 30, 40), die einem nachgeschalteten Anlagenabschnitt (2, 3, 4) zugeordnet sind, dazu eingerichtet sind, Produkteanforderungen an Steuereinheiten (10) von vorgeschalteten Anlagenabschnitten (1) zu erzeugen, und
• Steuereinheiten (10), die einem vorgeschalteten Anlagenabschnitt (1) zugeordnet sind, dazu eingerichtet sind, Produkteanforderungen von Steuereinheiten (20, 30, 40) von nachgeschalteten Anlagenabschnitten (2, 3, 4) zu empfangen und umzusetzen.

4. Steuereinrichtung gemäss Anspruch 1 oder 2 oder 3, wobei einem ersten, vorgeschalteten Anlagenabschnitt (1) mehrere nachgeschaltete Anlagenabschnitte (2, 3, 4) zugeordnet sind, ein Strom von Ausgangsprodukten (71) des ersten Anlagenabschnittes in mehrere Eingangsströme (21, 31, 41) der nachgeschalteten Anlagenabschnitte (2, 3, 4) gesplittet wird, und die mehreren Steuereinheiten (20, 30, 40), die den nachgeschalteten Anlagenabschnitten (2, 3, 4) zugeordnet sind, jeweils dazu eingerichtet sind, Produkteanforderungen (Pa21, Pa31, Pa41) an die Steuereinheit (10) des ersten, vorgeschalteten Anlagenabschnitts (1) zu erzeugen.

5. Steuereinrichtung gemäss einem der vorangehenden Ansprüche, wobei mindestens eine Steuereinheit (20, 30, 40) dazu eingerichtet ist, im Falle eines Produktionsfehlers, der zu einem Verlust von Produkten im zugeordneten Anlagenabschnitt (2, 3, 4) führt, eine Produkteanforderung an eine Steuereinheit (20) eines vorgeschalteten Anlagenabschnitts (1) zu erzeugen, zur Produktion von Ersatzprodukten für die verlorenen Produkte.

6. Steuereinrichtung gemäss Anspruch 5, wobei, wenn der Verlust von Produkten in einem Anlagenabschnitt (2, 3, 4) detektiert wird, und zu diesem Zeitpunkt eine Belieferung des Anlagenabschnittes (2, 3, 4) mit gleichartigen Produkten noch stattfindet, die mindestens eine Steuereinheit (20, 30, 40) dazu eingerichtet ist, eine ergänzende Produkteanforderung an die Steuereinheit (10) des vorgeschalteten Anlagenabschnitts (1) zu erzeugen, um die laufende Belieferung mit gleichartigen Produkten zu erweitern.

7. Steuereinrichtung gemäss Anspruch 5 oder 6, wobei, wenn der Verlust von Produkten in einem Anlagenabschnitt (2, 3, 4) detektiert wird, und zu diesem Zeitpunkt eine Belieferung des Anlagenabschnittes (2, 3, 4) mit gleichartigen Produkten nicht mehr stattfindet, die mindestens eine Steuereinheit (20, 30, 40) dazu eingerichtet ist, eine zusätzliche Produkteanforderung an die Steuereinheit (10) des vorgeschalteten Anlagenabschnitts (1) zu erzeugen, um eine zusätzliche Belieferung mit entsprechenden Produkten auszulösen.

8. Steuereinrichtung gemäss einem der Ansprüche 5 bis 7, wobei ein verlorenes Produkt ein Teilprodukt oder ein Endprodukt aus Druckereiprodukten (Kollektion) ist, oder ein Stapel oder ein Paket aus Endprodukten ist.

9. Steuereinrichtung gemäss einem der vorangehenden Ansprüche, wobei mehrere Steuereinheiten (10, 20, 30, 40) Instanzen derselben generischen Steuereinheit sind, und wobei eine generische Steuereinheit durch eine generische Steuer-Softwareeinheit gebildet ist.

10. Steuereinrichtung gemäss Anspruch 9, wobei eine Instanz einer generischen Steuereinheit
• durch Duplizieren einer generischen Steuer-Softwareeinheit erstellt ist, und/oder
• durch Programmieren einer generischen Steuer-Hardwareeinheit mit einer generischen Steuer-Softwareeinheit erstellt ist,
unter Konfiguration und Parametrierung entsprechend des jeweiligen, von dieser Instanz gesteuerten Anlagenabschnittes.

11. **Verfahren** zur Steuerung einer Verarbeitungsanlage zur Produktion von Kollektionen von Druckereiprodukten, wobei die Verarbeitungsanlage mindestens zwei Anlagenabschnitte (1, 2, 3, 4) aufweist, und jeder der Anlagenabschnitte (1, 2, 3, 4) dazu eingerichtet ist, aus mehreren Eingangsströmen (11, 12; 21, 22; 31, 32; 41, 42) von Teilprodukten als Eingangsprodukten einen Ausgangsstrom (27, 27a; 37, 37a, 47, 47a) von Kollektionen dieser Teilprodukte als Ausgangsprodukten zu erzeugen, und wobei ein Ausgangsstrom (27, 27a; 37, 37a, 47, 47a) mindestens eines ersten Anlagenabschnittes ein Eingangsstrom eines zweiten, dem ersten nachgeschalteten Anlagenabschnittes ist,
**dadurch gekennzeichnet, dass** die Steuereinrichtung mehrere programmierbare Steuereinheiten (10, 20, 30, 40) aufweist, wobei für jede der Steuereinheiten (10, 20, 30, 40) gilt, dass
• die Steuereinheit (10, 20, 30, 40) einem der Anlagenabschnitte zugeordnet ist und diesen Anlagenabschnitt steuert und überwacht,
• die Steuereinheit (10, 20, 30, 40) dazu programmiert ist, anhand einer vorgegebenen Produktedefinition von Ausgangsprodukten, im Folgenden Produkteanforderung (Pa2, Pa3, Pa4, Pa21, Pa31, Pa41) genannt, und einer vorgegebenen Produktedefinition von Eingangsprodukten, Produktvorgabe genannt, den zugeordneten Anlagenabschnitt (1, 2, 3, 4) derart anzusteuern, dass der Ausgangsstrom des Anlagenabschnittes (1, 2, 3, 4) der Produkteanforderung entspricht,
• wobei eine Produktedefinition jeweils eine Spezifikation einer vorgegebenen Anzahl von gleichartigen einzelnen Druckereiprodukten oder Kollektionen, und/oder eine Spezifikation von individuellen Kollektionen aufweist, und
wobei eine erste und eine zweite Steuereinheit (10, 20) dem ersten respektive dem zweiten Anlagenabschnitt (1, 2) zugeordnet sind und die folgenden Schritte ausführen:
• die zweite Steuereinheit (20) empfängt Produkteanforderungen (Pa2) von einer übergeordneten Steuerung (100) oder von einer anderen Steuereinheit (30) und steuert den zweiten Anlagenabschnitt (2) zur Produktion von (Teil)produkten entsprechend diesen Produkteanforderungen (Pa2),
• die zweite Steuereinheit (20) erzeugt weitere Produkteanforderungen (Pa21) für die erste Steuereinheit (10), und
• die erste Steuereinheit (10) empfängt diese weiteren Produkteanforderungen (Pa21) von der zweiten Steuereinheit (20) und steuert den ersten Anlagenabschnitt (1) zur Produktion von Teilprodukten entsprechend diesen weiteren Produkteanforderungen (Pa21).

12. **Computerlesbares Medium** mit einem darauf gespeicherten Computerprogramm, welches auf einer Datenverarbeitungseinheit einer Steuereinrichtung gemäss einem der Ansprüche 1 bis 9 ladbar und ausführbar ist, und welches bei der Ausführung das Verfahren nach Anspruch 10 ausführt.

13. **Verarbeitungsanlage** zur Produktion von Kollektionen von Druckereiprodukten, wobei die Verarbeitungsanlage mindestens zwei Anlagenabschnitte (1, 2, 3, 4) aufweist, und jeder der Anlagenabschnitte (1, 2, 3, 4) dazu eingerichtet ist, aus mehreren Eingangsströmen (11, 12; 21, 22; 31, 32; 41, 42) von Teilprodukten als Eingangsprodukten einen Ausgangsstrom (27, 27a; 37, 37a, 47, 47a) von Kollektionen dieser Teilprodukte als Ausgangsprodukten zu erzeugen, und wobei ein Ausgangsstrom (27, 27a; 37, 37a, 47, 47a) mindestens eines ersten Anlagenabschnittes ein Eingangsstrom eines zweiten, dem ersten nachgeschalteten Anlagenabschnittes ist, aufweisend eine Steuereinrichtung gemäss einem der Ansprüche 1 bis 9.
